(19) Europäisches Patentamt European Patent Office Office européen des brevets

(11) EP 1 801 963 B1

## (12) EUROPEAN PATENT SPECIFICATION

(45) Date of publication and mention
of the grant of the patent:
**17.02.2010 Bulletin 2010/07**

(51) Int Cl.:
*H03D 3/00* (2006.01)          *H04L 25/08* (2006.01)
*H04L 25/10* (2006.01)         *H04L 27/38* (2006.01)

(21) Application number: **06256543.7**

(22) Date of filing: **22.12.2006**

(54) **Detecting and correcting I/Q crosstalk in complex quadrature-modulated signals**

Erkennen und Korrigieren von I/Q-Nebensprechen in komplexen quadraturmodulierten Signalen

Détection et correction de la diaphonie I/Q dans des signaux complexes modulés en quadrature

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2005 GB 0526415**

(43) Date of publication of application:
**27.06.2007 Bulletin 2007/26**

(73) Proprietor: **BRITISH BROADCASTING CORPORATION**
**London W1A 1AA (GB)**

(72) Inventor: **Moss, Peter Neil**
**Tadworth**
**Surrey KT20 6NP (GB)**

(74) Representative: **Abnett, Richard Charles**
**Reddie & Grose**
**16 Theobalds Road**
**London**
**WC1X 8PL (GB)**

(56) References cited:
WO-A-01/91395          US-A- 4 581 586
US-A1- 2005 089 120    US-B1- 6 765 623
US-B1- 6 940 916

**Description**

**BACKGROUND OF THE INVENTION**

This invention relates to the correction of I/Q crosstalk in complex quadrature-modulated signals.

Quadrature modulation is commonly used to transmit two signal components on a single carrier. The two components comprise an in-phase component 'I' and a quadrature-phase component 'Q'. These signals have to be demodulated at the receiving end, and this involves downconverting the signals from the frequency of the transmission carrier. Quadrature downconversion to a zero intermediate frequency (IF) is a commonly-used technique in RF (radio frequency) systems since it simplifies filtering, and allows compact tunable systems to be realised. However, an RF system employing a quadrature downconvertor (also known as an I/Q downconvertor) suffers to some degree from I/Q crosstalk in its output. That is, part of the original 'I' signal ends up in the 'Q' channel and *vice versa.* Sometimes this is not a problem, for example if the crosstalk represents a simple time delay which is dealt with in timing recovery stages; mathematically, that case corresponds to a simple (frequency-dependent) rotation of the I/Q axes.

A more troublesome type of crosstalk is the case where a positive baseband (zero IF) frequency $+\omega_0$ is partially mapped to a negative frequency $-\omega_0$. Mathematically, this case is modelled by an unwanted additive *complex conjugate* of the original signal. It is this type of crosstalk the present proposal is designed to address, with the added capability of dealing with the case where the added conjugate term is distributed in time. The mapping $-\omega_0$ to $+\omega_0$ is normally present as well in this case. Circumventing such crosstalk by use of a low-IF involves the use of bulky image-channel filtering. Such filters, as well as being large, are relatively expensive and far from perfect. The present invention has as an object the detection and reduction of such crosstalk, thereby allowing the use of I/Q downconversion in performance-critical systems.

Reference may be made to United States Patent Application 2005/0089120 which describes a frequency shift keying demodulator system that provides programmable tunable spectral shaping; to United States Patent 6,765,623 which describes the measurement of correlation between I and Q components; and to United States Patent 4,581,586 which describes the demodulation of quadrature phase shift keyed signals in a manner that seeks to reduce crosstalk between I and Q channels. United States Patent 6,940,916 discloses a method for correcting I/Q cross-talk in the context of an analogue quadrature modulator and/or demodulator by pre-compensating and post-compensating respectively with adaptive digital filter correction structures.

**SUMMARY OF THE INVENTION**

The invention in its various aspects is defined in the independent claims 1 and 8 below to which reference may now be made. They define a method of correcting I/Q crosstalk and respectively an appartus for correcting I/Q crosstalk in a complex signal. Advantageous features are set forth in the appendent claims.

Preferred embodiments of the invention are described below by way of example with reference to the drawings. In each of these embodiments, I/Q crosstalk is reduced in a complex signal. A complex signal containing in-phase I and quadrature-phase Q components is received at an input, and its complex conjugate is formed. This complex conjugate signal is in general delayed to provide one or more complex conjugate signals with different delays. In a very simple ('one-tap') system no delay element need be used. These signals are then weighted in accordance with respective weighting factors. The thus-weighted signals are combined with each other and with the input signal or a signal derived therefrom in the sense such as to reduce I/Q crosstalk. The weighting factors are generated by providing the input signal or a signal derived therefrom as a first signal, and providing the input signal and/or a signal or signals derived therefrom as one or more second signals. Where there are plural second signals they have different delays corresponding to the delays of the complex conjugate signals. The complex non-conjugate correlation of the first signal and the or each of the second signals is then generated to provide one or more complex correlation signals, and each of the complex correlation signals is accumulated and multiplied by a convergence factor, to provide a weighting factor for a respective first signal.

The preferred use of delays allows for effective cancellation even if the crosstalk is frequency-selective. Furthermore, although the following discussion is directed primarily to the correction of downconversion errors, any similar I/Q errors in the transmitted signal can also be corrected.

It is assumed that there are no *intentional* conjugate terms in the desired signals, and that the signals are noise like. This is true, for instance, for DVB-T and DAB COFDM signals. It is also true for OFDM signals used in other applications such as in mobile telephony.

**BRIEF DESCRIPTION OF THE DRAWINGS**

The invention will now be described in more detail by way of example with reference to the accompanying drawings, in which:

**Fig. 1** is a block diagram of a first crosstalk canceller embodying the invention; and
**Fig. 2** is a block diagram of a second crosstalk canceller embodying the invention based on Fig. 1 and including a secondary LMS equalizer to compensate for certain errors introduced in the crosstalk canceller.

## DETAILED DESCRIPTION OF THE PREFERRED EMBODIMENTS

Various preferred embodiments of the invention will now be described by way of example with reference to the drawings. The embodiments may each be implemented in discrete hardware components, but may alternatively be implemented in software in for example a digital signal processor (DSP), in which case the figures should be regarded as flow charts. In each case the structure will first be described, followed by the manner of its operation.

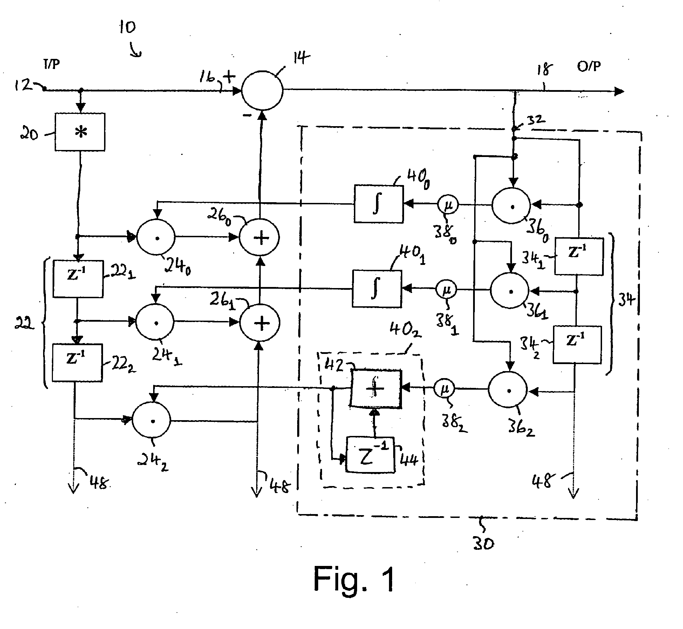

First Embodiment - Fig. 1

The first preferred embodiment of the invention is illustrated in the block circuit diagram of Fig. 1. The figure illustrates a crosstalk canceller 10 which has an input 12 for receiving a complex baseband input (I/P) signal, that is a signal that is quadrature modulated with in-phase (I) and quadrature-phase (Q) components. It is assumed that the input signal suffers from I/Q crosstalk. To the input 12 is connected the non-inverting input 16 of a combining circuit in the form of a subtractor 14, which subtracts from the input signal a correction signal, the generation of which will be described. The output of the subtractor 14 is applied to an output 18 and constitutes the output (O/P) of the canceller 10.

Also connected to the input 12 is a complex conjugate circuit 20 which generates the complex conjugate of the input signal. That is, it inverts the phase of the input signal, in known manner. If the input signal is designated X, then the complex conjugate is conventionally represented X*. Thus the complex conjugate circuit 20 is marked with an asterisk (*) in Fig. 1. The output of the complex conjugate circuit is then applied to a tapped delay line 22 consisting of one or more serially-connected delays $22_1$ ... $22_N$. In the example there are two delays (i.e. N = 2), giving three taps, but there may be just one delay, or even no delays, or there may be more than two, typically up to about twelve, depending on the application. The number of delays is not critical to the principle of operation. The duration of the delays is selected in relation to the intended signal. In a sampled system, the delays are multiples of the sampling interval, in the sequence 0,1,2 etc., though in principle other spacings could be used. It is desirable for convergence that the sampling interval be associated with a Nyquist bandwidth which just encompasses the signal.

The outputs of the N+1 taps, that is the output of the complex conjugate circuit 20 and each of the delays $22_N$, are complex conjugate signals which are applied to respective multipliers $24_0$ ... $24_N$ where they are each multiplied by a tap weight or weighting factor in the form of a respective complex number. The outputs of the N multipliers are then combined to produce the sum of the signals produced by the multipliers, in the manner of a transversal filter. As illustrated, the summing is achieved by a series of N two-input adder circuits $26_0$ ... $26_{N-1}$. The final output of the adder circuits 26 is applied as the correction signal to the subtractive input 28 of the subtractor 14 to be combined with the input signal in the sense such as to reduce I/Q crosstalk in the input signal. The output of the subtractor 14 constitutes the output of the canceller.

The arrangement for generating the tap weights applied to the multipliers $24_0$ ... $24_N$ will now be described. The tap weight generation circuit or detecting circuit generally illustrated at 30 has an input 32 coupled to receive the corrected signal from the subtractor 14 which is applied to the output 18. To the input 32 is connected a tapped delay line 34 comprising N delays $34_1$ ... $34_N$ corresponding in delay length and in number to the number of delays in the delay line 22. The tapped delay line thus provides N+1 signals, namely the signal at the input 32 and the signal at the output of each of the delays $34_1$ ... $34_N$.

The circuit 30 also includes N+1 complex correlators $36_0$ ... $36_N$. In what follows all references to 'correlator' are in fact non-conjugate correlators, i.e. they do not, as is usual, take the complex conjugate of one input before performing the complex multiplication operation. A first input to each correlator 36 is connected to the input 32 of circuit 30 to receive a first signal provided thereby which comprises the input signal or a signal derived therefrom, here *via* the subtractor 14. The second input to each correlator 36 is connected to a respective one of the taps in the tapped delay line 34 to receive a second signal provided thereby which comprises the input signal or a signal derived therefrom, here *via* the subtractor 14 and the delay line 34. Thus the first correlator $36_0$ is, in fact, a non-conjugate autocorrelator. The output of each correlator $36_0$ ... $36_N$ is a non-conjugate complex-number correlation signal which is then applied to a respective one of N+1 multipliers $38_0$ ... $38_N$. These multipliers multiply the complex correlation output of the respective correlator by a constant but selectable convergence or update factor. This will typically be less than 0.1 and may, for example, be down to 0.00001, depending on the speed of convergence required. Typical values can be 0.001 or 0.00005.

Finally in the tap weight generation circuit 30, N+1 integration or accumulation circuits $40_0$ ... $40_N$ are each connected to a respective one of the convergence factor multipliers $38_0$ ... $38_N$. These are of simple and in itself well-known structure. The structure of the integration circuit $40_2$ is shown in Fig. 1, and is seen to consist of a two-input adder 42 and a delay 44 of the same delay length as the delays in the delay lines 22 and 34. One input to the adder 42 is connected to the output of the respective convergence factor multiplier 38, and the delay 44 is coupled from the output to the other input of the adder 42. Thus the outputs of the multipliers 38 are steadily accumulated for what will, in due course, be a large number of iterations to increase the accuracy of the correction and track changes in the crosstalk in the input signal. The other integration circuits 40 are similarly constructed. The outputs of the integration circuits $40_0$ ... $40_N$ are then applied as the coefficient or weighting factor inputs to the multipliers $24_0$ ... $24_N$ respectively, as previously noted. The multipliers 38 and integration circuits 40 may be arranged in the other order.

Thus, in operation, a complex baseband signal suffering from complex-conjugate I/Q crosstalk is received at the input 12. It is split into two paths. The main path passes to the subtractor 14, where the correction signal is subtracted from the input signal; the resultant signal from the subtractor 14 forms the output of the crosstalk canceller. The input signal is also applied through the complex conjugate circuit 20, the output of which feeds the delay line 22. The output of each tap from the delay line is multiplied by the complex-number tap weight, and summed to produce the correction signal. The values of the tap weights are steered by the outputs of the complex correlators 36 fed from the canceller output.

The action of correlator $36_0$ is to ignore the wanted component, which will give a zero non-conjugate autocorrelation output, and to isolate the unwanted complex conjugate component. This is then used to allow a proportion of the complex-conjugate generated in circuit 20 to be subtracted from the input signal in subtractor 14, and the operation then repeats in an interactive manner. The system will converge to a steady state in which the amount of the complex conjugate in the output of the subtractor is minimised or indeed eliminated.

The other correlators $36_1$ ... $36_N$ operate similarly but with the corresponding delays. Each correlator effectively searches for complex-conjugate I/Q crosstalk in the output, at the corresponding delay, and steers the particular tap weight to minimize it.

As noted above, each of the delay lines 22, 34 contains two delays. If fewer delays are required, the unwanted ones (and associated components) are eliminated. If further delays are used, the components $22_i$, $24_i$, $26_i$, $34_i$, $36_i$, $38_i$, and $40_i$ are repeated down the page, as indicated by the downward arrows 48 on Fig. 1.

Theory - background

The techniques described are of value because we have appreciated that many commonly-encountered I/Q impairments can be regarded as equivalent to complex conjugate crosstalk. In particular, this can be shown to be true for:

- baseband crosstalk, where a proportion of I is added into Q and *vice versa*
- quadrature error, where the I and Q axes are not exactly orthogonal; note that this can occur at either the upconversion or downconversion ends of a transmission system
- I/Q gain inequality, where the gains applied to the I component and Q component are different.

Under certain conditions, this crosstalk can be minimised by the use of a system embodying the invention. These conditions are that:

- the frequency spectrum of the signal is at least approximately noise-like
- the signal does not contain any wanted complex conjugate components
- the signal is band-limited (i.e. of finite effective band without significant out-of-band components).

The conditions are in particular met by orthogonal frequency-division multiplex (OFDM) signals. OFDM signals are used in many modern transmission signals in the fields of digital broadcasting, telephoning, and broadband communications.

Theory - mathematical analysis

The steady-state situation will be considered in detail. It can be shown that the method approximates to a standard least mean square (LMS) system so far as the crosstalk terms are concerned, and standard LMS convergence theory can then be applied to show that convergence will take place, at least for practical low levels of crosstalk. Thus it is sufficient to consider the steady-state situation.

Looking at the steady-state case, we start by assuming a white noise-like signal *Y(n)* having frequency components n is corrupted by frequency-selective complex-conjugate crosstalk to form a new signal *X(n)*.

That is:

$$X(n) = Y(n) + \sum_{k=0}^{K-1} \gamma_k Y^*(n - k) \dots\dots\dots\dots\dots\dots\dots\dots\dots\dots\dots(1)$$

The second term on the right-hand side of equation (1) represents the complex-conjugate crosstalk. The coefficients $\gamma_k$ in this term form an FIR (finite impulse response) filter acting on the signal conjugate Y* to model the frequency selectivity. A total of $K$ coefficients are included, i.e. 0 to K.

Referring to Fig. 1, the requirement for the correlators 36 to be in steady-state can be expressed as:

$$\mathbf{E}\{Z(n)Z(n - j)\} = 0 \dots\dots\dots\dots j \in 0 \dots N - 1 \dots\dots\dots\dots\dots\dots\dots\dots(2)$$

where $\mathbf{E}$ denotes statistical expectation, $N$ is the number of taps on the delay line, and $Z(n)$ is the output signal.

Considering the input-side delay line 22 and associated taps ($h_j$ say), together with the input $X(n)$, allows us to write $Z(n)$ as:

$$Z(n) = X(n) - \sum_{j=0}^{N-1} h_j X^*(n - j) \dots\dots\dots\dots\dots\dots\dots\dots\dots\dots\dots\dots(3)$$

Hence:

$$Z(n) = Y(n) + \sum_{k=0}^{K-1} \gamma_k Y^*(n - k) - \sum_{j=0}^{N-1} h_j \left( Y^*(n - j) + \sum_{k=0}^{K-1} \gamma_k^* Y(n - j - k) \right) \dots\dots\dots\dots(4)$$

Second order small quantities can be ignored; $h$ and $y$ are considered first-order small quantities. With this approximation, and choosing $N=K,$ simplifies the expression to:

$$Z(n) = Y(n) + \sum_{k=0}^{K-1} (\gamma_k - h_k) Y^*(n - k) \dots\dots\dots\dots\dots\dots\dots\dots\dots\dots\dots(5)$$

Now, if the correlator bank reaches steady-state with $h_k = \gamma_k$ for all $k,$ then the output $Z(n)$ will be free of crosstalk terms to a degree determined by the second-order terms which have been ignored.

To show this is indeed the case, apply the condition expressed in (2) to $Z(n)$ as defined in (5):

$$\mathbf{E}\{Z(n)Z(n - j)\} = \mathbf{E}\left\{ \left[ Y(n) + \sum_{k=0}^{K-1}(\gamma_k - h_k) Y^*(n - k) \right]\left[ Y(n - j) + \sum_{k=0}^{K-1}(\gamma_k - h_k) Y^*(n - j - k) \right] \right\} \dots\dots(6)$$

which must be equal to zero for all $j$.

Since $Y$ is white-noise-like, its autocorrelation is impulsive, and the only expectation terms which return a non-zero value are of the form $E\{Y(l)Y^*(m)\}$ with $l \neq m$. In particular, terms of the form $E\{Y(l)Y(m)\}$ are always zero.

This allows (6) to be simplified to:

$$\mathbf{E}\{Z(n)Z(n - j)\} = \mathbf{E}\left\{ \left[ Y(n)\sum_{k=0}^{K-1}(\gamma_k - h_k) Y^*(n - j - k) + Y(n - j)\sum_{k=0}^{K-1}(\gamma_k - h_k) Y^*(n - k) \right] \right\} \dots\dots(7)$$

The first term of the right-hand side of this expectation only contributes if $j=k=0$. This contribution is zero if:

$$h_0 = \gamma_0 \dots\dots\dots\dots\dots\dots\dots\dots\dots\dots\dots\dots\dots\dots\dots\dots\dots (8)$$

The second term has potential contributions at all vales of $k$ within the range 0 to $K$-1, again requiring j=k. These terms are only all zero if:

$$h_k = \gamma_k \dots\dots\dots\dots\dots\dots\dots\dots k \in 0 \dots K-1 \dots\dots\dots\dots\dots\dots\dots\dots (9)$$

Hence if (9) is satisfied, (6) equates to zero, the correlators are in steady-state, and (5) reduces to:

$$Z(n) = Y(n) \dots\dots\dots\dots\dots\dots\dots\dots\dots\dots\dots\dots\dots\dots\dots\dots (10)$$

as is required. (The fact that the index-0 term has two contributors to the expectation calculation points to the fact that that correlator has twice the gain of the others. This can be compensated for by dividing the associated convergence constant $\mu$ by two, though this is only optional in practice.)

The above mathematical discussion has assumed a white noise-like signal. In fact we believe that the system will still work for most practical non-white signals, though it may leave a slightly greater residual error and take longer to converge.

The system has been described and illustrated in relation to quadrature downconversion to zero IF, that is to baseband where the centre frequency of the transmitted band is downconverted to zero. There are however applications which use a so-called 'low IF', which is an IF which is within the bandwidth of the transmitted signal or is close to it, though not actually at zero. The system is also applicable to such downconverted signals.

Modification of Fig. 1

The arrangement of Fig. 1 only uses samples prior to a given sample to provide the correction for that sample. However the subsequent samples are equally important. The embodiment of Fig. 1 can be modified to use both prior and subsequent samples. In this modification the canceller includes additional delays, each providing a delay of about half the overall delay of the delay lines 22, 34. The first additional delay is between the input 12 and the non-inverting input 16 to the subtractor 14. The signal from the input to the first delay line 22 is not delayed. The second additional delay is between the output of the subtractor 14 and the output 18 of the canceller, on the one hand, and those inputs to the complex correlators that are not connected to the delay line 34, on the other. In this way the correction signal at any instant is derived from portions e.g. samples of the input signal both prior to and subsequent to that instant.

The algorithm described above is generalised to deal with 'two-sided' crosstalk terms as follows, that is to say, equation (1) becomes:

$$X(n) = Y(n) + \sum_{k=-K}^{K} \gamma_k Y^*(n-k) \dots\dots\dots\dots\dots\dots\dots\dots\dots\dots\dots\dots\dots (11)$$

The total number of terms in the expansion is now 2K+1, and they are evenly spread over positive and negative values of delay. At first sight this may appear non-causal (impossible), but it can happen that the non-conjugate term Y(n) exists time-advanced elsewhere in the system and generates the crosstalk in such a way that the situation modelled by equation (11) is realised.

The modified cancellation system just described deals with this case by the use of the additional extra delays. Choosing N=K allows the two-sided crosstalk to be dealt with in the same way as previously described for single-sided crosstalk in relation to Fig. 1.

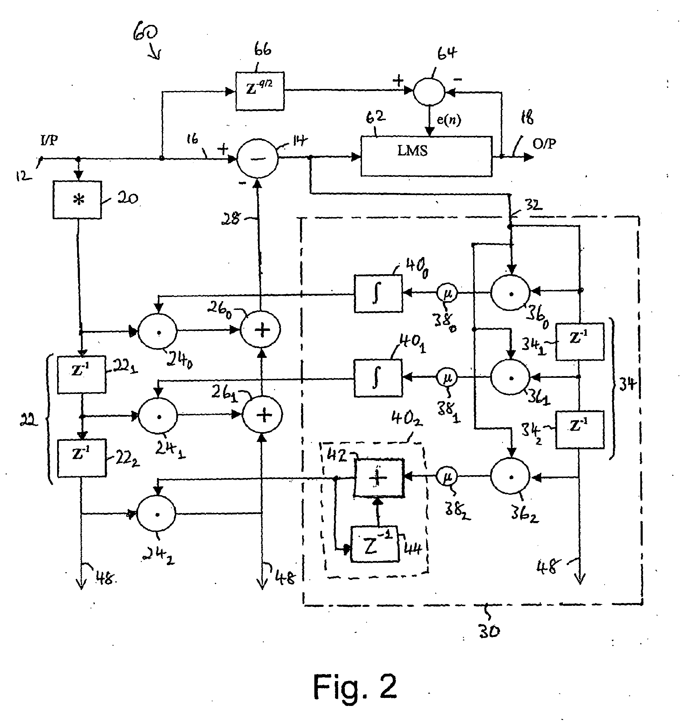

Second Embodiment - Fig. 2

Referring back to equation (4) it will be recalled that certain second-order terms were ignored. These are terms in Y(n), not Y*(n). This implies that a small frequency response error will have been introduced on the wanted output. It is believed that this will be negligible in most cases, but if critical a secondary LMS (least mean square) equalizer can be included to restore the signal frequency response to virtually its original characteristic.

This is illustrated in Fig. 2 where the crosstalk canceller 60 includes an LMS equalizer 62 which is connected between the output of the subtractor 14 and the output 18 of the canceller. The LMS equalizer is itself of well-known construction and has a plurality of q taps. The output of the equalizer 62 constitutes the output 18 of the canceller and is applied to the inverting input of a subtractor 64. A delay 66 of delay substantially equal to half the delay in the LMS equalizer 62 is coupled to the input 12 and provides a signal to the non-inverting input of the subtractor 64. The $Y(n)$ terms at the output of the subtractor 14 and the output of the delay 66 should be the same. If they are not, the equalizer with the subtractor loop tends to reduce the difference.

Although two separate embodiments, together with a possible modification, have been described it will be appreciated that their features may be used in combinations other than those specifically shown and described. In particular, the two-sided variant of the modification described may be used with the supplemental LMS equalizer of Fig. 2.

Experimental simulation results

A three-tap simulation was performed to check that the system works as intended. A complex white noise source was used as the 'wanted' signal and deliberately corrupted with delayed conjugate terms. In this simulation, the run length was 2000000 iterations; the convergence factor $\mu$ was 0.00005 for all the taps; the wanted signal power was defined as 1.0; and the subsidiary LMS convergence factor in the LMS equalizer was 0.0001

In the nomenclature of equation (1), the coefficients $\gamma_k$ were arbitrarily chosen as:

$$\gamma_0 = \beta\ (0.8 + j0.05)$$

$$\gamma_1 = \beta\ (0.5 + j0.05)$$

$$\gamma_2 = \beta(0.3 - j0.1225)$$

All higher-index terms were zero. The sum of the squared magnitudes of the above terms is unity if $\beta = 1$. In practice $\beta$ was set to be either 0.1 (representing -20dB I/Q crosstalk) or 0.5 (representing -6dB).

Two parameters were measured on each run. The first was the final crosstalk reduction achieved in dB with respect to the initial crosstalk level, and secondly the power of the difference signal formed by subtracting the original uncorrupted signal from the final output.

*Run 1: Crosstalk level -20dB*

Corrected crosstalk level: 0.00085 + j0.00073 (-39dB on uncorrected level)
Power of difference signal: -37dB (with respect to unity wanted output power)

*Run 2a: Crosstalk level -6dB*

Corrected crosstalk level: 0.0059 + j0.00052 (-38.5dB on uncorrected level)
Power of difference signal: -10dB (with respect to unity wanted output power)

*Run 2b: Crosstalk level -6dB; additional 24-tap LMS equalizer to correct frequency response*

Corrected crosstalk level: 0.0059 + j0.00052 (-38.5dB on uncorrected level)
Power of difference signal: -36dB (with respect to unity wanted output power)
In the case of run 2b, the difference signal was taken between the input and output signals, where the former had been delayed by half the LMS length (i.e. 12).

It will be seen that the system is effective in very significantly reducing the unwanted complex conjugate crosstalk, with a typical crosstalk rejection in excess of 30dB. The system works well in its simplest form for levels of incoming I/Q crosstalk of 20dB down on the main input signal. The system can be readily extended to correct incidental frequency response errors which occur when the crosstalk level is higher by using the supplemental LMS equaliser 62 as in Fig. 2. In this case levels of crosstalk up to -6dB can be comfortably accommodated. The systems described are of wide application and can be used in broadcasting applications, including DVB-T (digital video broadcasting - terrestrial) receivers, transposers, radio cameras, and on-channel repeaters, and DAB (digital audio - or sound - broadcasting) receivers.

**Claims**

1. A method of correcting I/Q crosstalk in a complex signal, the method comprising the steps of:

   receiving a complex input signal containing in-phase I and quadrature-phase Q components;
   combining the input signal with a correction signal in the sense such as to reduce I/Q crosstalk and so as to provide an output signal;
   providing a first signal from the output signal;
   providing one or more second signals from the output signal;
   generating the non-conjugate complex correlation of the first signal and the or each of the second signals to provide one or more complex correlation signals;
   accumulating the or each of the complex correlation signals and combining them to provide accumulated complex correlation signals;
   generating the complex conjugate of the input signal to provide one or more complex conjugate signals;
   weighting the or each complex conjugate signal in accordance with a respective accumulated complex correlation signal to provide weighted signals; and
   combining the said weighted signals with each other to provide the correction signal.

2. A method according to claim 1, further comprising multiplying the or each of the accumulated complex correlation signals by a convergence factor.

3. A method according to claim 1 or 2, in which the step of generating the complex conjugate of the input signal comprises delaying the complex conjugate signal to provide one or more delayed signals with different delays.

4. A method according to claim 1, 2 or 3, in which a plurality of non-conjugate complex correlations are generated, and the step of generating the complex correlations comprises delaying the second signal to provide one or more second delayed signals with different delays.

5. A method according to any of claims 1 to 4, in which the output signal is a delayed signal derived from the input signal, and the first signal is a delayed signal derived from the output signal, whereby the output signal at any instant is derived from portions of the input signal both prior to and subsequent to that instant.

6. A method according to any of claims 1 to 5, further comprising the step of equalising the output signal to provide an equalised output signal.

7. A method according to claim 6, in which the equalisation is substantially a least-mean-squares equalisation over a predetermined delay period.

8. Apparatus for correcting I/Q crosstalk in a complex signal, the apparatus comprising:

   an input (12) for receiving a complex input signal containing in-phase I and quadrature-phase Q components;
   first combining means (14) for combining the input signal with a correction signal in the sense such as to reduce I/Q crosstalk so as to provide an output signal;
   means (32) coupled to the output of the first combining means for providing a first signal;
   means (34) coupled to the output of the first combining means for providing one or more second signals;
   complex correlation generation means (36) for generating the non-conjugate complex correlation of the first signal and the or each of the second signals to provide one or more complex correlation signals;
   accumulating means (40) for accumulating the or each of the complex correlation signals to provide accumulated complex correlation signals;
   complex conjugate generation means (20) for generating the complex conjugate of the input signal to provide one or more complex conjugate signals;
   weighting means (24) for weighting the or each complex conjugate signal in accordance with a respective accumulated complex correlation signal to provide weighted signals; and
   second combining means (26) for combining the said weighted signals with each other to provide the correction signal.

9. Apparatus according to claim 8, further comprising multiplying means (38) for multiplying the or each of the accumulated complex correlation signals by a convergence factor.

10. Apparatus according to claim 8 or 9, in which the complex conjugate generation means comprises means (22) for delaying the complex conjugate signal to provide one or more delayed signals with different delays.

11. Apparatus according to claim 8, 9 or 10, in which the complex correlation generation means generates a plurality of complex correlation signals, and includes delay means (34) for delaying the second signal to provide one or more second delayed signals with different delays.

12. Apparatus according to any of claims 8 to 11, in which the first combining means (14) is connected to the input through a first delay.

13. Apparatus according to any of claims 8 to 12, in which the means for providing the first signal comprises a second delay connected to the output of the first combining means (14).

14. Apparatus according to any of claims 8 to 13, further comprising an equalizer (62) for equalizing the output signal from the combining means (14) to provide an equalised output signal.

15. Apparatus according to claim 14, in which the equalizer is a least-mean-squares equalizer (62) operating over a predetermined delay period, and is provided with a subtractor (64) for subtracting the output of the equalizer from the input signal delayed (66) by substantially half the predetermined delay period.

**Patentansprüche**

1. Verfahren zum Korrigieren von I/Q-Nebensprechen in einem komplexen Signal, wobei das Verfahren die folgenden Schritte umfasst:

Empfangen eines komplexen Eingangssignals, das phasengleiche I- und Quadraturphasen-Q-Komponenten enthält,
Kombinieren des Eingangssignals mit einem Korrektursignal in einem solchen Sinn, dass das I/Q-Nebensprechen verringert wird und ein Ausgangssignal bereitgestellt wird,
Bereitstellen eines ersten Signals aus dem Ausgangssignal,
Bereitstellen eines oder mehrerer zweiter Signale aus dem Ausgangssignal,
Erzeugen der nicht konjugierten Komplexkorrelation des ersten Signals und des oder jedes der zweiten Signale, um ein oder mehrere Komplexkorrelationssignale bereitzustellen,
Akkumulieren des oder jedes der Komplexkorrelationssignale und Kombinieren derselben, um akkumulierte Komplexkorrelationssignale bereitzustellen,
Erzeugen der komplex Konjugierten des Eingangssignals, um ein oder mehrere konjugierte Komplexsignale bereitzustellen,
Wichten des oder jedes konjugierten Komplexsignals entsprechend einem jeweiligen akkumulierten Komplexkorrelationssignal, um gewichtete Signale bereitzustellen, und
Kombinieren der gewichteten Signale miteinander, um das Korrektursignal bereitzustellen.

2. Verfahren nach Anspruch 1, das ferner umfasst, das oder jedes der akkumulierten Komplexkorrelationssignale mit einem Konvergenzfaktor zu multiplizieren.

3. Verfahren nach Anspruch 1 oder 2, wobei der Schritt des Erzeugens der konjugierten komplexen Zahl des Eingangssignals umfasst, das konjugierte Komplexsignal zu verzögern, um ein oder mehrere verzögerte Signale mit unterschiedlichen Verzögerungen bereitzustellen.

4. Verfahren nach Anspruch 1, 2 oder 3, wobei mehrere nicht konjugierte Komplexkorrelationen erzeugt werden und der Schritt des Erzeugens der Komplexkorrelationen umfasst, das zweite Signal zu verzögern, um ein oder mehrere zweite verzögerte Signale mit unterschiedlichen Verzögerungen bereitzustellen.

**5.** Verfahren nach einem der Ansprüche 1 bis 4, wobei das Ausgangssignal ein aus dem Eingangssignal abgeleitetes verzögertes Signal ist und das erste Signal ein aus dem Ausgangssignal abgeleitetes verzögertes Signal ist, wobei das Ausgangssignal zu jedem Zeitpunkt von Abschnitten des Eingangssignals, die diesem Zeitpunkt sowohl vorausgehen als auch nachfolgen, abgeleitet ist.

**6.** Verfahren nach einem der Ansprüche 1 bis 5, das ferner den Schritt umfasst, das Ausgangssignal zu entzerren, um ein entzerrtes Ausgangssignal bereitzustellen.

**7.** Verfahren nach Anspruch 6, wobei die Entzerrung im Wesentlichen eine Entzerrung nach dem Verfahren der kleinsten mittleren Quadrate über einen vorbestimmten Verzögerungszeitraum ist.

**8.** Vorrichtung zum Korrigieren von I/Q-Nebensprechen in einem komplexen Signal, wobei die Vorrichtung Folgendes umfasst:

einen Eingang (12) zum Empfangen eines komplexen Eingangssignals, das phasengleiche I- und Quadraturphasen-Q-Komponenten enthält,

erste Kombinationsmittel (14) zum Kombinieren des Eingangssignals mit einem Korrektursignal in einem solchen Sinn, dass das I/Q-Nebensprechen verringert wird und ein Ausgangssignal bereitgestellt wird,

Mittel (32), die an den Ausgang der ersten Kombinationsmittel gekoppelt sind, zum Bereitstellen eines ersten Signals,

Mittel (34), die an den Ausgang der ersten Kombinationsmittel gekoppelt sind, zum Bereitstellen eines oder mehrerer zweiter Signale,

Komplexkorrelationserzeugungsmittel (36) zum Erzeugen der nicht konjugierten Komplexkorrelation des ersten Signals und des oder jedes der zweiten Signale, um ein oder mehrere Komplexkorrelationssignale bereitzustellen,

Akkumulationsmittel (40) zum Akkumulieren des oder jedes der Komplexkorrelationssignale, um akkumulierte Komplexkorrelationssignale bereitzustellen,

Erzeugungsmittel (20) für konjugierte komplexe Zahlen zum Erzeugen der konjugierten komplexen Zahl des Eingangssignals, um ein oder mehrere konjugierte Komplexsignale bereitzustellen,

Wichtungsmittel (24) zum Wichten des oder jedes konjugierten Komplexsignals entsprechend einem jeweiligen akkumulierten Komplexkorrelationssignal, um gewichtete Signale bereitzustellen, und

zweite Kombinationsmittel (26) zum Kombinieren der gewichteten Signale miteinander, um das Korrektursignal bereitzustellen.

**9.** Vorrichtung nach Anspruch 8, die ferner Multiplikationsmittel (38) umfasst, um das oder jedes der akkumulierten Komplexkorrelationssignale mit einem Konvergenzfaktor zu multiplizieren.

**10.** Vorrichtung nach Anspruch 8 oder 9, wobei die Erzeugungsmittel für konjugierte komplexe Zahlen Mittel (22) umfassen, um das konjugierte Komplexsignal zu verzögern, um ein oder mehrere verzögerte Signale mit unterschiedlichen Verzögerungen bereitzustellen.

**11.** Vorrichtung nach Anspruch 8, 9 oder 10, wobei die Komplexkorrelationserzeugungsmittel mehrere nicht konjugierte Komplexkorrelationen erzeugen und Verzögerungsmittel (34) umfassen, um das zweite Signal zu verzögern, um ein oder mehrere zweite verzögerte Signale mit unterschiedlichen Verzögerungen bereitzustellen.

**12.** Vorrichtung nach einem der Ansprüche 8 bis 11, wobei die ersten Kombinationsmittel (14) durch eine erste Verzögerung mit dem Eingang verbunden sind.

**13.** Vorrichtung nach einem der Ansprüche 8 bis 12, wobei die Mittel zum Bereitstellen des ersten Signals eine zweite Verzögerung umfassen, die mit dem Ausgang der ersten Kombinationsmittel (14) verbunden ist.

**14.** Vorrichtung nach einem der Ansprüche 8 bis 13, die ferner einen Entzerrer (62) umfasst, um das Ausgangssignal aus den Kombinationsmitteln (14) zu entzerren, um ein entzerrtes Ausgangssignal bereitzustellen.

**15.** Vorrichtung nach Anspruch 14, wobei der Entzerrer ein Entzerrer (62) nach dem Verfahren der kleinsten mittleren Quadrate ist, der über einen vorbestimmten Verzögerungszeitraum arbeitet, und mit einem Subtrahierglied (64) versehen ist, um den Ausgang des Entzerrers von dem im Wesentlichen um die Hälfte des vorbestimmten Verzögerungszeitraums verzögerten (66) Eingangssignal zu subtrahieren.

**Revendications**

1. Procédé de correction de diaphonie I/Q dans un signal complexe, le procédé comprenant les étapes suivantes :

   recevoir un signal d'entrée complexe contenant des composants en phase « I » et en quadrature « Q » ;
   combiner le signal d'entrée avec un signal de correction dans une telle direction pour réduire la diaphonie I/Q et à fournir ainsi un signal de sortie ;
   fournir un premier signal à partir du signal de sortie ;
   fournir un ou plusieurs deuxième(s) signal/ux à partir du signal de sortie ;
   générer la corrélation complexe non conjuguée du premier signal et des deuxièmes signaux ou de chacun d'eux pour fournir un ou plusieurs signal/ux de corrélation complexe ;
   cumuler les signaux de corrélation complexe ou chacun d'eux et les combiner pour fournir des signaux de corrélation complexe cumulés ;
   générer le conjugué complexe du signal d'entrée pour fournir un ou plusieurs signal/ux conjugués complexes ;
   pondérer le ou chaque signal conjugué complexe selon un signal de corrélation complexe cumulé pour fournir des signaux pondérés ;
   et
   combiner lesdits signaux pondérés les uns aux autres pour fournir le signal de correction.

2. Procédé selon la revendication 1, comprenant en outre une multiplication des signaux de corrélation complexe cumulés ou de chacun d'eux par un facteur de convergence.

3. Procédé selon la revendication 1 ou 2, dans lequel l'étape de génération du conjugué complexe du signal d'entrée comprend une temporisation du signal conjugué complexe pour fournir un ou plusieurs signal/ux temporisé(s) avec différents retards.

4. Procédé selon la revendication 1, 2 ou 3, dans lequel une pluralité de corrélations complexes non conjuguées est générée, et l'étape de génération de corrélations complexes comprend une temporisation du deuxième signal pour fournir un ou plusieurs signal/ux temporisé(s) avec différents retards.

5. Procédé selon l'une quelconque des revendications 1 à 4, dans lequel le signal de sortie est un signal temporisé dérivé du signal d'entrée, et le premier signal est un signal temporisé dérivé du signal de sortie, dans lequel le signal de sortie à un quelconque instant est dérivé de parties du signal d'entrée à la fois avant et après cet instant.

6. Procédé selon l'une quelconque des revendications 1 à 5, comprenant en outre l'étape d'égalisation du signal de sortie pour fournir un signal de sortie égalisé.

7. Procédé selon la revendication 6, dans lequel l'égalisation est sensiblement une égalisation quadratique moyenne minimale sur une période de temporisation prédéterminée.

8. Appareil de correction de diaphonie I/Q dans un signal complexe, l'appareil comportant :

   une entrée (12) pour recevoir un signal d'entrée complexe contenant des composants en phase « I » et en quadrature « Q » ;
   un premier moyen de combinaison (14) pour combiner le signal d'entrée avec un signal de correction de manière à réduire la diaphonie I/Q afin de fournir un signal de sortie ;
   un moyen (32) couplé à la sortie du premier moyen de combinaison pour fournir un premier signal ;
   un moyen (34) couplé à la sortie du premier moyen de combinaison pour fournir un ou plusieurs deuxième(s) signal/ux ;
   un moyen de génération de corrélation complexe (36) pour générer la corrélation complexe non conjuguée du premier signal et des deuxièmes signaux ou de chacun des deuxièmes signaux pour fournir un ou plusieurs signal/ux de corrélation complexe ;
   un moyen de cumul (40) pour cumuler les signaux de corrélation complexe ou chacun d'eux pour fournir des signaux de corrélation complexe cumulés ;
   un moyen de génération de conjugué complexe (20) pour générer le conjugué complexe du signal d'entrée pour fournir un ou plusieurs signal/ux conjugués complexe(s) ;
   un moyen de pondération (24) pour pondérer le ou chaque signal conjugué complexe selon un signal de corrélation complexe cumulé afin de fournir des signaux pondérés ; et

un deuxième moyen de combinaison (26) pour combiner lesdits signaux pondérés les uns aux autres afin de fournir le signal de correction.

9. Appareil selon la revendication 8, comprenant en outre un moyen de multiplication (38) pour multiplier les signaux de corrélation complexe cumulés ou chacun d'eux par un facteur de convergence.

10. Appareil selon la revendication 8 ou 9, dans lequel le moyen de génération du conjugué complexe comprend un moyen (22) pour temporiser le signal conjugué complexe afin de fournir un ou plusieurs signal/ux temporisé(s) avec différents retards.

11. Appareil selon la revendication 8, 9 ou 10, dans lequel le moyen de génération de corrélation complexe génère une pluralité de signaux de corrélation complexe, et comporte un moyen de temporisation (34) pour temporiser le deuxième signal afin de fournir un ou plusieurs deuxième(s) signal/ux temporisé(s) avec différents retards.

12. Appareil selon l'une quelconque des revendications 8 à 11, dans lequel le premier moyen de combinaison (14) est connecté à l'entrée au travers d'une première temporisation.

13. Appareil selon l'une quelconque des revendications 8 à 12, dans lequel le moyen pour fournir le premier signal comprend une deuxième temporisation connectée à la sortie du premier moyen de combinaison (14).

14. Appareil selon l'une quelconque des revendications 8 à 13, comprenant en outre un égalisateur (62) pour égaliser le signal de sortie venant du moyen de combinaison (14) afin de fournir un signal de sortie égalisé.

15. Appareil selon la revendication 14, dans lequel l'égalisateur est un égalisateur à erreur quadratique minimale (62) qui opère sur une période de temporisation prédéterminée et qui est doté d'un soustracteur (64) pour soustraire la sortie de l'égalisateur du signal d'entrée temporisé (66) une période équivalente à sensiblement la moitié de la période de temporisation prédéterminée.

Fig. 1

EP 1 801 963 B1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050089120 A
- US 6765623 B
- US 4581586 A
- US 6940916 B